# FASCICULE DE BREVET EUROPEEN

(11) **EP 3 053 768 B1**
(45) Date de publication et mention de la délivrance du brevet: **29.04.2020**
(21) Numéro de dépôt: 16154453.1
(22) Date de dépôt: 05.02.2016
(51) Int. Cl.: B60J 9/04, F24F 9/00

(54) **DISPOSITIF DE GÉNÉRATION DE RIDEAU D'AIR, NOTAMMENT DESTINÉ À ÉQUIPER UN VÉHICULE FERROVIAIRE**
VORRICHTUNG ZUM ERZEUGEN EINES LUFTSCHLEIERS, INSBESONDERE ZUR AUSSTATTUNG EINES SCHIENENFAHRZEUGS
A DEVICE FOR GENERATING AIR CURTAINS, IN PARTICULAR FOR A RAILWAY VEHICLE

(30) Priorité: 06.02.2015 FR 1550967
(43) Date de publication de la demande: 10.08.2016
(73) Titulaire: ALSTOM Transport Technologies, 93400 Saint-Ouen (FR)
(72) Inventeur: LE BASTARD, Jean, 78000 VERSAILLES (FR); STAUDT, Christoph, 69117 HEIDELBERG (DE)
(74) Mandataire: Lavoix

(56) Documents cités:
- EP-A1- 1 439 353
- WO-A1-2014/204297
- DE-A1- 3 523 937

## Description

La présente invention concerne un dispositif de génération de rideau d'air, notamment destiné à équiper un véhicule, et plus particulièrement un véhicule ferroviaire.

On connait déjà, dans l'état de la technique, notamment d'après EP 0 968 096, un dispositif de génération de rideau d'air le long d'un plan délimitant une zone intérieure et une zone extérieure, comportant des moyens de génération d'un rideau d'air.

Un tel rideau d'air est destiné recouvrir une ouverture ménagée dans une paroi agencée dans ledit plan. Le rideau d'air est un flux laminaire d'air, couvrant uniformément l'intégralité d'une hauteur et/ou d'une largeur de l'ouverture. Ce rideau d'air forme une barrière d'air séparant efficacement la zone intérieure de la zone extérieure, en empêchant notamment des échanges d'air et de chaleur entre la zone intérieure et la zone extérieure, ou en empêchant l'intrusion de poussières ou d'insectes depuis la zone extérieure vers la zone intérieure.

On connait également d'après DE 35 23 937 ou EP 1 439 353, un dispositif de génération de rideau d'air semblable à celui du préambule de la revendication 1.

La présente invention a notamment pour but de perfectionner un tel dispositif de génération de rideau d'air, en améliorant ses fonctionnalités et en l'adaptant aux contraintes d'un espace confiné comme un véhicule ferroviaire. En particulier, l'invention a notamment pour but de fournir un dispositif de génération de rideau d'air favorisant le flux de personnes passant au travers de l'ouverture.

A cet effet, l'invention a notamment pour objet un dispositif de génération de rideau selon la revendication 1.

Un tel dispositif est généralement destiné à équiper une ouverture munie d'une porte.

Afin d'assurer le confort thermique des passager situés dans la zone intérieure, il est souhaitable de minimiser les échanges de chaleur entre la zone intérieure et la zone extérieure. Ceci permet en particulier de limiter la consommation de moyens de climatisation équipant cette zone intérieure.

A cet effet, dans l'état de la technique, la porte est maintenue fermée autant que possible pour limiter ces échanges de chaleur.

En maintenant la porte ouverte plus longtemps, on autorise le passage de personnes à travers l'ouverture pendant une plus grande durée, si bien qu'on améliore le flux de personnes à travers l'ouverture.

Le dispositif selon l'invention permet d'optimiser le flux de personnes par d'autres façons.

Plus particulièrement, en orientant le flux du rideau d'air dans une direction de diffusion dirigée vers l'extérieur du véhicule, on applique un léger effet de poussée des personnes sortantes se déplaçant depuis la zone intérieure vers la zone extérieure, les incitant ainsi au déplacement dans ce sens. En outre, le flux d'air dirigé vers les quais incite des personnes stationnant dans la zone extérieure à proximité de l'ouverture à s'écarter, et ainsi à ne pas gêner le passage des personnes sortantes.

De la même manière, en orientant le flux du rideau d'air dans une direction de diffusion dirigée vers l'intérieur du véhicule, on applique un léger effet de poussée des personnes entrantes se déplaçant depuis la zone extérieure vers la zone intérieure, les incitant ainsi au déplacement dans ce sens. En outre, le flux du rideau d'air dirigé vers l'intérieur du véhicule incite des personnes stationnant dans la zone intérieure à proximité de l'ouverture à s'écarter, et ainsi à ne pas gêner le passage des personnes entrantes.

Ainsi, le dispositif selon l'invention permet d'optimiser le flux de personnes traversant ladite ouverture, en favorisant la sortie ou l'entrée de personnes à travers cette ouverture.

Un dispositif selon l'invention peut comporter en outre l'une ou plusieurs des caractéristiques suivantes, prises seules ou selon toutes combinaisons techniquement envisageables.
- La première direction de diffusion est dirigée vers la zone intérieure, et la seconde direction de diffusion est dirigée vers la zone extérieure.
- Les moyens de génération comportent des moyens de diffusion diffusant un unique rideau d'air, le long dudit plan, et le dispositif de génération de rideau d'air comporte des moyens de modification de l'orientation des moyens de diffusion, entre une première position dans laquelle le rideau d'air est diffusé dans la première direction de diffusion, et une seconde position dans laquelle le rideau d'air est diffusé dans la seconde direction de diffusion.
- Les premier et second rideaux d'air générant ensemble, par effet venturi, un flux d'air résultant se diffusant dans une direction résultante, l'unité de contrôle est propre à modifier ladite direction résultante en modifiant les flux des premier et second rideaux d'air.
- L'unité de contrôle est propre à régler une température de chaque rideau d'air.
- Le dispositif de génération comporte des moyens de détection de conditions météorologiques dans la zone extérieure, notamment de mesure d'une température dans la zone extérieure et/ou de détection de pluie, l'unité de contrôle étant configurée pour régler le flux et/ou la température de chaque rideau d'air en fonction des conditions météorologiques détectées.
- Le dispositif de génération comporte des moyens de climatisation de la zone intérieure, propres à passer dans différents états de climatisation de cette zone intérieure, l'unité de contrôle étant configurée pour régler le flux et/ou la température de l'au moins un rideau d'air en fonction de l'état des moyens de climatisation.
- Les moyens de diffusion comportent des buses d'émission d'un rideau d'air, au moins l'une des buses étant agencée pour émettre le rideau d'air correspondant verticalement, et/ou au moins l'une des buses étant agencée pour émettre le rideau d'air correspondant horizontalement.

L'invention concerne également une cabine, notamment une cabine de véhicule, délimitant une zone intérieure et une zone extérieure, et comportant une ouverture de passage entre la zone intérieure et la zone extérieure, comportant un dispositif de génération de rideau d'air tel que défini précédemment, agencé pour générer l'au moins un rideau d'air recouvrant l'ouverture de passage, ladite ouverture de passage étant définie dans ledit plan.

Avantageusement, la cabine comporte au moins une porte mobile entre une position fermée dans laquelle l'ouverture de passage est obturée et une position ouverte dans laquelle cette ouverture de passage est libérée, l'unité de contrôle étant configurée pour augmenter le flux de l'au moins un rideau d'air préalablement au passage de la porte depuis sa position ouverte jusqu'à sa position fermée.

L'invention sera mieux comprise à la lecture de la description qui va suivre, donnée uniquement à titre d'exemple et faite en se référant aux figures annexées, parmi lesquelles :
- la figure 1 est une vue en perspective d'une cabine, notamment formée par une voiture de véhicule ferroviaire, équipée d'un dispositif de génération de rideau d'air selon un exemple de mode de réalisation de l'invention ;
- la figure 2 est une vue schématique en coupe de la cabine de la figure 1 équipée d'un dispositif de génération de rideau d'air selon un premier exemple de mode de réalisation de l'invention.
- la figure 3 est une vue schématique en coupe de la cabine de la figure 1 équipée d'un dispositif de génération de rideau d'air selon un second exemple de mode de réalisation de l'invention.

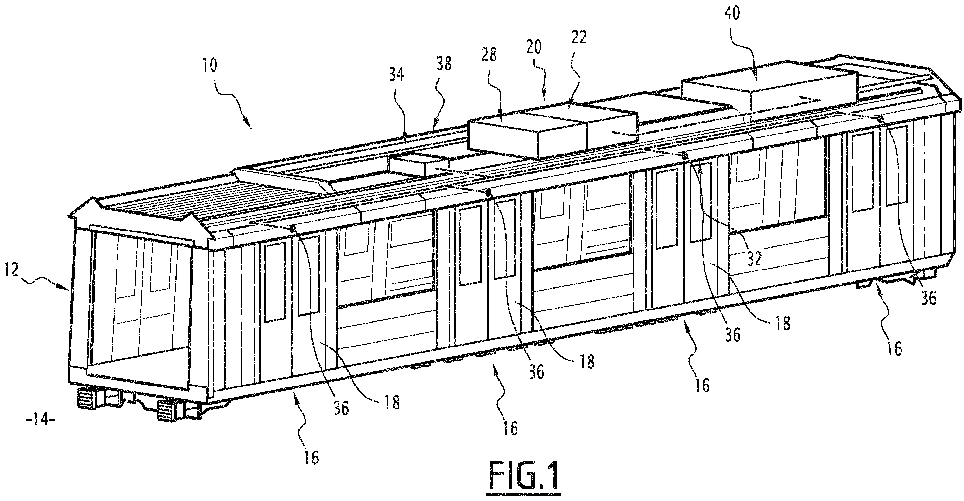

On a représenté, sur la figure 1, une cabine 10, notamment une cabine de véhicule et plus particulièrement une cabine formée par une voiture de véhicule ferroviaire.

La cabine 10 est formée par des parois délimitant ensemble une zone intérieure 12 et une zone extérieure 14.

Au moins l'une de ces parois comporte au moins une ouverture 16 de passage entre la zone intérieure 12 et la zone extérieure 14. La cabine 10 comporte également, pour chaque ouverture de passage 16, au moins une porte 18 mobile entre une position fermée dans laquelle l'ouverture de passage 16 est obturée, et une position ouverte dans laquelle cette ouverture de passage 16 est libérée.

L'ouverture de passage 16 s'étend sensiblement dans un plan P. Ainsi, le plan P forme une délimitation entre la zone intérieure 12 et la zone extérieure 14.

La cabine selon l'invention comporte un dispositif 20 de génération de rideau d'air, comportant des moyens de génération de rideau d'air comportent des moyens de diffusion de rideau d'air, propres à diffuser au moins un rideau d'air le long du plan (P), dans au moins des première et seconde directions de diffusion distinctes.

Le dispositif 20 de génération de rideau d'air comporte une unité 34 de contrôle propre à commander la diffusion de l'au moins un rideau d'air dans l'une et/ou l'autre des première et seconde directions de diffusion.

Avantageusement, la première direction de diffusion est dirigée vers la zone intérieure 12, et la seconde direction de diffusion est dirigée vers la zone extérieure 14.

Ainsi, le dispositif de génération 20 permet de favoriser l'émission d'un rideau d'air dans la première direction lorsque des passagers se déplacent depuis la zone extérieure 14 vers la zone intérieure 12, et de favoriser l'émission d'un rideau d'air dans la seconde direction lorsque des passagers se déplacent depuis la zone intérieure 12 vers la zone extérieure 14.

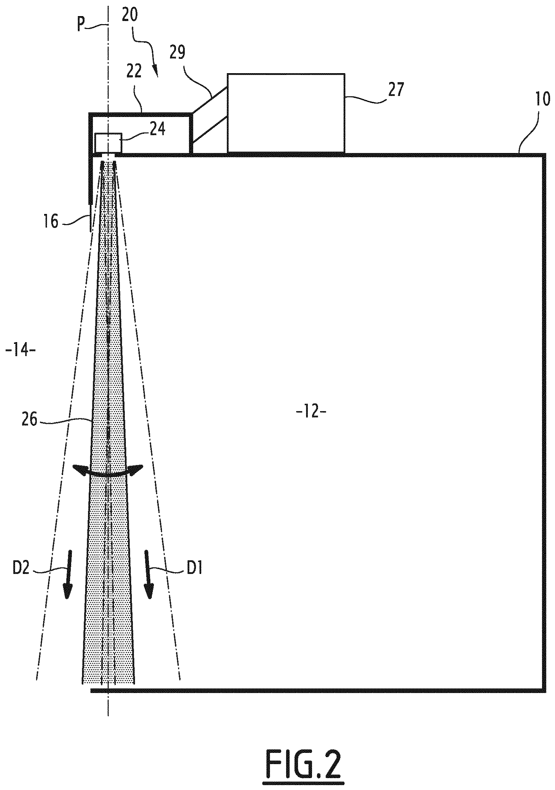

On a représenté sur la figure 2 un dispositif 20 de génération de rideau d'air selon un premier exemple de mode de réalisation de l'invention.

Ce dispositif de génération 20 comporte des moyens 22 de génération d'un unique rideau d'air 26. Un tel rideau d'air 26 est également appelé « lame d'air » lorsque le rideau d'air est généré avec une largeur de diffusion réduite, de l'ordre de 10°.

Les moyens de génération 22 comprenant des moyens de diffusion 24 diffusant le rideau d'air 26 le long dudit plan P.

Les moyens de diffusion 24 comportent par exemple des buses d'émission du rideau d'air 26, agencées à proximité du plan P. Ces buses d'émission sont alimentées par une soufflerie 27 par l'intermédiaire d'une tuyauterie 29 adaptée. La soufflerie 27 permet avantageusement d'alimenter les buses d'émission en air avec un flux et/ou une température variables.

Le dispositif de génération 20 selon l'invention comporte par ailleurs des moyens de modification de l'orientation des moyens de diffusion 24, entre une première position dans laquelle le rideau d'air 26 est diffusé dans une première direction de diffusion D1, dirigée vers la zone intérieure 12, et une seconde position dans laquelle le rideau d'air 26 est diffusé dans une seconde direction de diffusion D2 dirigée vers la zone extérieure 14.

Par exemple, les moyens de modification d'orientation permettent une rotation des moyens de diffusion 24, et plus particulièrement des buses, de manière à ce que le rideau d'air 26 diffusé soit dirigé selon la direction de diffusion souhaitée.

Avantageusement, les moyens de diffusion 24 peuvent prendre une pluralité de positions angulaires, entre une première position angulaire dans laquelle le rideau d'air 26 est diffusé dans la première direction de diffusion D1, et une seconde position angulaire dans laquelle e rideau d'air 26 est diffusé dans la seconde direction de diffusion D2.

La position angulaire des moyens de diffusion 24 est commandée par l'unité de contrôle 34, en fonction de la situation. Par exemple, les moyens de diffusion 24 sont orientés pour que le rideau d'air 26 soit émis vers la zone intérieure 12 (première direction de diffusion D1) lorsque des passagers montent dans le véhicule et vers la zone extérieure 14 (seconde direction de diffusion D2) lorsque des passagers descendent de ce véhicule.

Dans l'exemple décrit, les buses sont agencées pour émettre le rideau d'air 26 verticalement, du haut vers le bas.

Conformément à une variante non représentée, les buses sont agencées pour émettre le rideau d'air correspondant horizontalement.

De même, certaines buses peuvent être agencées de part et d'autre de l'ouverture 16, et émettre des flux d'air se rejoignant pour former le rideau d'air correspondant.

Avantageusement, l'unité 34 de contrôle du rideau d'air 26 est propre à régler le flux et/ou la température de l'air de ce rideau d'air 26 et propre à commander le rideau d'air 26 selon une direction de diffusion souhaitée.

A cet effet, l'unité de contrôle 34 est propre à commander la soufflerie 27 alimentant le rideau d'air 26 et à commander les moyens de modification d'orientation permettant une rotation des moyens de diffusion 24 de manière à orienter le rideau d'air 26 selon la direction de diffusion souhaitée.

Le contrôle de la direction de diffusion du rideau d'air 26 par l'unité de contrôle 34, via les moyens de modification d'orientation, permet d'optimiser le passage de personnes à travers l'ouverture 16. Plus particulièrement, lorsque la cabine 10 est une voiture de véhicule ferroviaire, ceci permet d'optimiser le flux de passagers en station.

Par exemple, l'unité de contrôle 34 est propre à passer dans un premier mode de fonctionnement, dans lequel le flux du rideau d'air 26 est dirigé dans la première direction de diffusion D1, vers la zone intérieure 12, pour favoriser le déplacement de personnes depuis la zone extérieure 14 vers la zone intérieure 12. Dans ce cas, le rideau d'air 26 a tendance à entrainer les personnes entrantes depuis la zone extérieure 14 vers la zone intérieure 12, et à inciter à s'écarter des personnes stationnant dans la zone intérieure 12 à proximité de l'ouverture 16, susceptible de gêner le passage des personnes entrantes.

La première direction de diffusion D1 forme par exemple un angle de 15° avec le plan P.

L'unité de contrôle 34 est également propre à passer dans un second mode de fonctionnement, dans lequel le flux du rideau d'air 26 est dirigé dans la seconde direction de diffusion D2, vers la zone extérieure 14, pour favoriser le déplacement de personnes vers la zone extérieure 14. Dans ce cas, le rideau d'air 26 a tendance à entrainer les personnes sortantes depuis la zone intérieure 12 vers la zone extérieure 14, et à inciter à s'écarter des personnes stationnant dans la zone extérieure 14 à proximité de l'ouverture 16, susceptible de gêner le passage des personnes sortantes.

La seconde direction de diffusion D2 forme par exemple un angle de 20° avec le plan P.

Le passage du premier au second mode de fonctionnement peut être temporisé à partir de l'ouverture de la porte 18, par exemple pour favoriser la sortie de personnes pendant une première temporisation faisant suite à l'ouverture de la porte 18, puis à favoriser l'entrée de personnes pendant une seconde temporisation, préalable à la fermeture de la porte 18.

En variante, ou en complément, le dispositif 20 comporte des moyens 36 de détection de personnes à proximité du plan P. Dans ce cas, l'unité de contrôle 34 est propre à régler la direction de diffusion du rideau d'air 26 en fonction de la présence et/ou de mouvements de personnes à proximité dudit plan P. Ainsi, au lieu de temporiser les premier et second modes de fonctionnement, l'unité de contrôle 34 reste dans le second mode de fonctionnement tant que des personnes sont détectées comme se déplaçant depuis la zone intérieure 12 vers la zone extérieure 14, puis reste dans le premier mode de fonctionnement tant que des personnes sont détectées comme se déplaçant depuis la zone extérieure 14 vers la zone intérieure 12.

Conformément à une autre variante, le passage dans le premier ou second mode de fonctionnement peut être commandé manuellement, notamment par le conducteur du véhicule ferroviaire et/ou par un agent en station.

Par ailleurs, l'unité de contrôle 34 est avantageusement propre à réduire les flux du rideau d'air 26 lorsque les personnes sont détectées à proximité du plan P, pour des raisons de confort de ces personnes.

En variante ou en complément des modes de fonctionnement évoquées ci-dessus, l'unité de commande 34 présente avantageusement un troisième mode de fonctionnement dans lequel le flux du rideau d'air 26 est augmenté, préalablement au passage de la porte 18 depuis sa position ouverte jusqu'à sa position fermée, afin d'inciter des personnes se trouvant à proximité du plan P de s'éloigner de ce plan P, pour ainsi ne pas entraver la fermeture de la porte 18.

En variante, cette augmentation de flux n'est réalisée que lorsqu'au moins une personne est détectée à proximité du plan P par les moyens de détection 36.

Avantageusement, le dispositif 20 comporte des moyens 38 de détection de conditions météorologiques dans la zone extérieure 14, par exemple agencés sur l'unité de contrôle 34. Ces moyens de détection 38 sont notamment propres à mesurer une température dans la zone extérieure et/ou à détecter de la pluie ou la neige et/ou à détecter la vitesse du vent.

L'unité de contrôle 34 est alors propre à régler le flux et/ou la température du rideau d'air 26 en fonction des conditions météorologiques détectées.

La température du rideau d'air 26 peut notamment être augmentée lorsque la température extérieure mesurée est inférieure à un seuil prédéterminé, et/ou lorsque cela est commandé manuellement.

De même, la température du rideau d'air 26 peut être abaissée lorsque la température extérieure détectée est supérieure à un seuil prédéterminé, et/ou lorsque cela est commandé manuellement.

La température optimale pour le rideau d'air peut être calculée par l'unité de contrôle 34 en fonction de la température extérieure, ou en variante être choisies manuellement.

Avantageusement, l'unité de contrôle 34 est configurée pour augmenter le flux du rideau d'air lorsque de la pluie ou le vent est détecté. Ainsi, le rideau d'air 26 a un effet de séchage pour les passagers passant au travers et de protection contre le vent.

Avantageusement, l'unité de contrôle 34 est configurée pour interrompre le rideau d'air 26 lorsque la porte 18 est en position fermée ou après une temporisation faisant suite à la fermeture de cette porte. Dans ce cas, ce rideau d'air 26 est réactivé préalablement à l'ouverture de la porte 18, notamment en station, par exemple afin d'inciter les personnes à proximité de cette porte 18 à reculer préalablement à son ouverture.

En variante, l'unité de contrôle 34 est configurée pour maintenir, le rideau d'air activé même lorsque la porte 18 est fermée, afin d'optimiser l'isolation thermique de celle-ci, et ainsi maintenir l'intérieur 12 dans des conditions optimales de climatisation.

On notera qu'en variante, l'orientation du rideau d'air pourrait être basée sur un principe aéraulique.

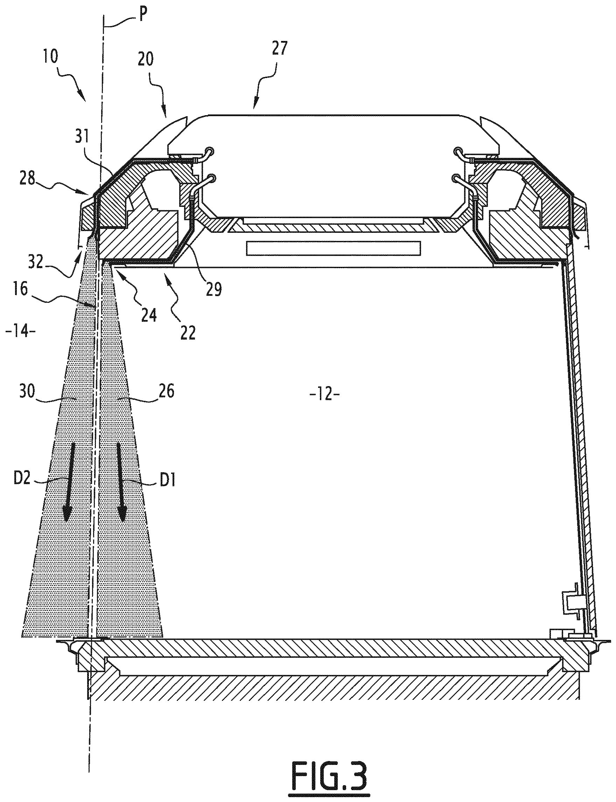

On a représenté sur la figure 3 un dispositif 20 de génération de rideau d'air selon un deuxième exemple de mode de réalisation de l'invention. Sur cette figure 3, les éléments analogues à ceux de la figure 2 sont désignés par des références identiques.

Conformément à ce deuxième exemple de mode de réalisation, le dispositif de génération 20 de rideau d'air comporte des premiers moyens 22 de génération d'un premier rideau d'air 26, comprenant des premiers moyens de diffusion 24 diffusant le premier rideau d'air 26 le long dudit plan P, dans la zone intérieure 12. Avantageusement, les premiers moyens de diffusion 24 sont orientés pour que le premier rideau d'air 26 ne traverse pas le plan P.

Les premier moyens de diffusion 24 comportent par exemple des premières buses d'émission du premier rideau d'air 26, agencées à proximité du plan P et orientées pour émettre le premier rideau d'air 26 vers la zone intérieure 12, dans la première direction de diffusion D1. Les premières buses d'émission sont alimentées par une soufflerie 27 par l'intermédiaire d'une tuyauterie 29 adaptée. La soufflerie 27 permet avantageusement d'alimenter les premières buses d'émission en air avec un flux variable et/ou une température variable.

Le dispositif de génération 20 selon l'invention comporte par ailleurs des seconds moyens 28 de génération d'un second rideau d'air 30, comprenant des seconds moyens de diffusion 32 diffusant le second rideau d'air 30 le long dudit plan P dans la zone extérieure 14. Avantageusement, les seconds moyens de diffusion 32 sont orientés pour que le second rideau d'air 30 ne traverse pas le plan P.

Les seconds moyens de diffusion 32 comportent des secondes buses d'émission du second rideau d'air 30, agencées à proximité du plan P et orientées pour émettre le second rideau d'air 30 vers la zone extérieure 14, dans la seconde direction de diffusion D2.

Les secondes buses d'émission sont alimentées par une soufflerie par l'intermédiaire d'une tuyauterie 31 adaptée. La soufflerie permet avantageusement d'alimenter les secondes buses d'émission en air avec un flux et /ou une température variables.

Par exemple, une même soufflerie alimente les premières et secondes buses d'émission, avec toutefois des ramifications séparées, comportant des moyens séparés et indépendants de modification du flux et la température de l'air du rideau d'air correspondant.

En variante, chacun des premier 26 et second 30 rideaux d'air est généré par une soufflerie distincte.

Les premier 26 et second 30 rideaux d'air, de par leur proximité interagissent entre eux, d'après le principe appelé effet Venturi, permettant, générant ensemble un flux d'air résultant se diffusant dans une direction résultante.

L'unité de contrôle 34 est propre à modifier ladite direction résultante en modifiant les pressions relatives de chaque rideau d'air, sans nécessiter un système mécanique d'orientation.

Dans un mode de réalisation préférée, pour renforcer l'effet Venturi, les rideaux d'air 26, 30 sont générés avec une largeur de diffusion réduite, de l'ordre de 10°, formant ainsi des lames d'air. A cet effet, les buses d'émission sont adaptées pour générer de telles lames d'air. Par exemple, les buses d'émission sont de type à effet Coanda.

Dans l'exemple décrit, les premières et secondes buses sont agencées pour émettre les premier 26 et second 30 rideaux d'air verticalement, du haut vers le bas. En variante, les premières et secondes buses pourraient être agencées pour émettre les rideaux d'air du bas vers le haut. Il est à noter que certaines buses pourraient être agencées en bas, en étant orientées vers le haut, et d'autres en haut, en étant orientées vers le bas, pour générer deux flux d'air, l'un orienté vers le bas et l'autre vers le haut, se rejoignant pour former le rideau d'air correspondant.

Conformément à une variante non représentée, les premières et secondes buses sont agencées pour émettre le rideau d'air correspondant horizontalement. De même, certaines buses peuvent être agencées de part et d'autre de l'ouverture 16, et émettre des flux d'air se rejoignant pour former le rideau d'air correspondant.

Le dispositif de génération 20 comporte par ailleurs une unité 34 de contrôle des premier 26 et second 30 rideaux d'air, propre à régler le flux et/ou la température de l'air de ce premier rideau d'air 26 et/ou de ce second rideau d'air 30. A cet effet, l'unité de contrôle 34 est propre à commander chaque soufflerie alimentant les premier 26 et second 30 rideaux d'air.

Le contrôle de l'orientation du rideau d'air résultant par l'unité de contrôle 34 via le réglage du flux des premier 26 et second 30 rideaux d'air permet d'optimiser le passage de personnes à travers l'ouverture 16. Plus particulièrement, lorsque la cabine 10 est une voiture de véhicule ferroviaire, ceci permet d'optimiser le flux de passagers en station.

Par exemple, l'unité de contrôle 34 est propre à passer dans un premier mode de fonctionnement, dans lequel le flux du premier rideau d'air 26 est augmenté et le flux du second rideau d'air 30 est réduit, pour favoriser le déplacement de personnes depuis la zone extérieure 14 vers la zone intérieure 12. Dans ce cas, le flux d'air résultant a tendance à entrainer les personnes entrantes depuis la zone extérieure 14 vers la zone intérieure 12, et à inciter à s'écarter des personnes stationnant dans la zone intérieure 12 à proximité de l'ouverture 16, susceptible de gêner le passage des personnes entrantes.

A l'inverse, l'unité de contrôle 34 est également propre à passer dans un second mode de fonctionnement, dans lequel le flux du premier rideau d'air 26 est réduit et le flux du second rideau d'air 30 est augmenté pour orienter le flux d'air résultant vers l'extérieur et favoriser le déplacement de personnes vers la zone extérieure 14. Dans ce cas, le flux d'air résultant a tendance à entrainer les personnes sortantes depuis la zone intérieure 12 vers la zone extérieure 14, et à inciter à s'écarter des personnes stationnant dans la zone extérieure 14 à proximité de l'ouverture 16, susceptible de gêner le passage des personnes sortantes.

Le passage du premier au second mode de fonctionnement peut être temporisé à partir de l'ouverture de la porte 18, par exemple pour favoriser la sortie de personnes pendant une première temporisation faisant suite à l'ouverture de la porte 18, puis à favoriser l'entrée de personnes pendant une seconde temporisation, préalable à la fermeture de la porte 18.

En variante, ou en complément, le dispositif 20 comporte des moyens 36 de détection de personnes à proximité du plan P. Dans ce cas, l'unité de contrôle est propre à régler le flux du premier 26 et/ou du second 30 rideaux d'air en fonction de la présence et/ou de mouvements de personnes à proximité dudit plan P. Ainsi, au lieu de temporiser les premier et second modes de fonctionnement, l'unité de contrôle 34 reste dans le premier mode de fonctionnement tant que des personnes sont détectées comme se déplaçant depuis la zone intérieure 12 vers la zone extérieure 14, puis reste dans le second mode de fonctionnement tant que des personnes sont détectées comme se déplaçant depuis la zone extérieure 14 vers la zone intérieure 12.

Conformément à une autre variante, le passage dans le premier ou second mode de fonctionnement peut être commandé manuellement, notamment par le conducteur du véhicule ferroviaire et/ou par un agent en station.

Par ailleurs, l'unité de contrôle 34 est avantageusement propre à réduire les flux des premier 26 et second 30 rideaux d'air lorsque les personnes sont détectées à proximité du plan P, pour des raisons de confort de ces personnes.

En variante ou en complément des modes de fonctionnement évoquées ci-dessus, l'unité de commande 34 présente avantageusement un troisième mode de fonctionnement dans lequel le flux du premier 26 et/ou du second 30 rideau d'air est augmenté, préalablement au passage de la porte 18 depuis sa position ouverte jusqu'à sa position fermée, afin d'inciter des personnes se trouvant à proximité du plan P de s'éloigner de ce plan P, pour ainsi ne pas entraver la fermeture de la porte 18.

En variante, cette augmentation de flux n'est réalisée que lorsqu'au moins une personne est détectée à proximité du plan P par les moyens de détection 36.

Avantageusement, le dispositif 20 comporte des moyens 38 de détection de conditions météorologiques dans la zone extérieure 14, par exemple agencés sur l'unité de contrôle 34. Ces moyens de détection 38 sont notamment propres à mesurer une température dans la zone extérieure et/ou à détecter de la pluie ou la neige et/ou à détecter la vitesse du vent.

L'unité de contrôle 34 est alors propre à régler le flux et/ou la température du premier 26 et/ou du second 30 rideau d'air en fonction des conditions météorologiques détectées.

La température des rideaux d'air peut notamment être augmentée lorsque la température extérieure mesurée est inférieure à un seuil prédéterminé, et/ou lorsque cela est commandé manuellement. Dans ce cas, la température du second rideau d'air 30 est de préférence inférieure à celle du premier rideau d'air 26, de sorte que la température évolue progressivement depuis la zone extérieure 14 vers la zone intérieure 12.

De même, la température du premier 26 et/ou second 30 rideaux d'air peut être abaissée lorsque la température extérieure détectée est supérieure à un seuil prédéterminé, et/ou lorsque cela est commandé manuellement. Dans ce cas, la température du second rideau d'air 30 est de préférence supérieure à la température du premier rideau d'air 26, de sorte que la température évolue progressivement depuis la zone extérieure 14 vers la zone intérieure 12.

Les températures optimales pour les rideaux d'air peuvent être calculées par l'unité de contrôle 34 en fonction de la température extérieure, ou en variante être choisies manuellement.

Avantageusement, l'unité de contrôle 34 est configurée pour augmenter le flux des deux rideaux d'air 26, 30 lorsque de la pluie ou du vent est détecté. Ainsi, le flux d'air résultant a un effet de séchage pour les passagers passant au travers et de protection contre le vent.

Avantageusement, le dispositif 20 comporte par ailleurs des moyens 40 de climatisation de la zone intérieure 12, propres à passer dans différents états de climatisation de la zone intérieure 12, notamment en fonction des conditions météorologiques dans la zone extérieure 14. En particulier, les moyens de climatisation 40 sont propres à modifier la température dans cette zone intérieure 12. Ces moyens de climatisation 40 sont par exemple des moyens classiques équipant une voiture de véhicule ferroviaire de l'état de la technique.

L'unité de contrôle 34 est reliée à ces moyens de climatisation 40, et elle est propre à régler le flux et/ou la température du premier rideau d'air 26 et/ou du second rideau d'air 30 en fonction de l'état des moyens de climatisation 40.

En particulier, le premier rideau d'air 26 est chauffé ou refroidi sensiblement à la même température que celle prévue dans la zone intérieure 12 par les moyens de climatisation 40.

Avantageusement, l'unité de contrôle 34 est configurée pour interrompre le second rideau d'air lorsque la porte 19 est position fermée ou après une temporisation faisant suite à la fermeture de cette porte. Dans ce cas, ce second rideau d'air 30 est réactivé préalablement à l'ouverture de la porte 18, notamment en station, par exemple afin d'inciter les personnes à proximité de cette porte 18 à reculer préalablement à son ouverture.

En revanche, le premier rideau d'air 26 est avantageusement maintenu activé même lorsque la porte 18 est fermée, afin d'optimiser l'isolation thermique de celle-ci, et ainsi maintenir l'intérieur 12 dans des conditions optimales de climatisation.

On notera que l'invention n'est pas limitée au mode de réalisation décrit mais pourrait présenter diverses variantes, dans les limites de la portée des revendications.

En particulier, d'autres configurations de fonctionnement des rideaux d'air et d'orientation peuvent être envisagées, impliquant éventuellement plus de deux rideaux d'air ou lames d'air.

## Revendications

1. Dispositif (20) de génération de rideau d'air le long d'un plan (P) délimitant une zone intérieure (12) et une zone extérieure (14), comprenant des moyens (22, 28) de génération de rideau d'air comportant des moyens (24, 32) de diffusion de rideau d'air, propres à diffuser au moins un rideau d'air (26, 30) le long du plan (P), dans au moins des première (D1) et seconde (D2) directions de diffusion distinctes, le dispositif (20) de génération de rideau d'air comportant une unité (34) de contrôle propre à commander la diffusion de l'au moins un rideau d'air (26, 30) dans l'une et/ou l'autre des première (D1) et seconde (D2) directions de diffusion, **caractérisé en ce que** :
- l'unité (34) de contrôle est propre à régler un flux de chaque rideau d'air (26, 30), et
- le dispositif de génération de rideau d'air (20) comporte des moyens (36) de détection de personnes à proximité dudit plan (P), l'unité de contrôle (34) étant configurée pour régler le flux de l'au moins un rideau d'air (26, 30) en fonction de la présence et/ou de mouvements de personnes à proximité dudit plan (P),
- le dispositif de génération de rideau d'air (20) comporte des premiers moyens (22) de génération d'un premier rideau d'air (26), comprenant des premiers moyens de diffusion (24) diffusant le premier rideau d'air (26) le long dudit plan (P), dans la première direction de diffusion (D1),
- le dispositif de génération de rideau d'air (20) comporte des seconds moyens (28) de génération d'un second rideau d'air (30), comprenant des seconds moyens de diffusion (32) diffusant le second rideau d'air (30), le long dudit plan (P), dans la seconde direction de diffusion (D2),
- l'unité (34) de contrôle est propre à commander la diffusion du premier rideau d'air (26) et du second rideau d'air (30), l'unité de contrôle (34) étant propre à passer dans un premier mode de fonctionnement, dans lequel le flux du premier rideau d'air (26) est augmenté et/ou le flux du second rideau d'air (30) est réduit pour favoriser le déplacement de personnes depuis la zone extérieure (14) vers la zone intérieure (12), ou dans un second mode de fonctionnement, dans lequel le flux du premier rideau d'air (26) est réduit et/ou le flux du second rideau d'air (30) est augmenté pour favoriser le déplacement de personnes depuis la zone intérieure (12) vers la zone extérieure (14).

2. Dispositif (20) de génération de rideau d'air selon la revendication 1, dans lequel la première direction de diffusion (D1) est dirigée vers la zone intérieure (12), et la seconde direction de diffusion (D2) est dirigée vers la zone extérieure (14).

3. Dispositif (20) de génération de rideau d'air selon la revendication 1 ou 2, dans lequel :
- les moyens de génération (22) comportent des moyens de diffusion (24) diffusant un unique rideau d'air (26), le long dudit plan (P), et
- le dispositif de génération de rideau d'air (20) comporte des moyens de modification de l'orientation des moyens de diffusion (24), entre une première position dans laquelle le rideau d'air (26) est diffusé dans la première direction de diffusion (D1), et une seconde position dans laquelle le rideau d'air (26) est diffusé dans la seconde direction de diffusion (D2).

4. Dispositif de génération de rideau d'air (20) selon l'une quelconque des revendications précédentes, dans lequel, les premier (26) et second (30) rideaux d'air générant ensemble, par effet venturi, un flux d'air résultant se diffusant dans une direction résultante, l'unité de contrôle (34) est propre à modifier ladite direction résultante en modifiant les flux des premier (26) et second (30) rideaux d'air.

5. Dispositif de génération de rideau d'air (20) selon l'une quelconque des revendications précédentes, dans lequel l'unité (34) de contrôle est propre à régler une température de chaque rideau d'air (26, 30).

6. Dispositif de génération de rideau d'air (20) selon la revendication 5, comportant des moyens (38) de détection de conditions météorologiques dans la zone extérieure (14), notamment de mesure d'une température dans la zone extérieure (14) et/ou de détection de pluie, l'unité de contrôle (34) étant configurée pour régler le flux et/ou la température de chaque rideau d'air (26, 30) en fonction des conditions météorologiques détectées.

7. Dispositif de génération de rideau d'air (20) selon la revendication 5 ou 6, comportant des moyens (40) de climatisation de la zone intérieure (12), propres à passer dans différents états de climatisation de cette zone intérieure (12), l'unité de contrôle (34) étant configurée pour régler le flux et/ou la température de l'au moins un rideau d'air (26, 30) en fonction de l'état des moyens de climatisation (40).

8. Dispositif de génération de rideau d'air (20) selon l'une quelconque des revendications précédentes, dans lequel les moyens de diffusion (24, 32) comportent des buses d'émission d'un rideau d'air, au moins l'une des buses étant agencée pour émettre le rideau d'air correspondant verticalement, et/ou au moins l'une des buses étant agencée pour émettre le rideau d'air correspondant horizontalement.

9. Cabine (10), notamment cabine de véhicule, délimitant une zone intérieure (12) et une zone extérieure (14), et comportant une ouverture (16) de passage entre la zone intérieure (12) et la zone extérieure (14), comportant un dispositif (20) de génération de rideau d'air selon l'une quelconque des revendications 1 à 8, agencé pour générer l'au moins un rideau d'air (26, 30) recouvrant l'ouverture de passage (16), ladite ouverture de passage (16) étant définie dans ledit plan (P).

10. Cabine (10) selon la revendication 9, comportant au moins une porte (18) mobile entre une position fermée dans laquelle l'ouverture de passage (16) est obturée et une position ouverte dans laquelle cette ouverture de passage (16) est libérée, l'unité de contrôle (34) étant configurée pour augmenter le flux de l'au moins un rideau d'air (26, 30) préalablement au passage de la porte (18) depuis sa position ouverte jusqu'à sa position fermée.

## Patentansprüche

1. Vorrichtung (20) zum Erzeugen eines Luftvorhangs entlang einer Ebene (P), die eine Innenzone (12) und eine Außenzone (14) abgrenzt, Mittel (22, 28) zum Erzeugen des Luftvorhangs umfassend, die Mittel (24, 32) zum Aussenden des Luftvorhangs aufweisen, die geeignet sind, mindestens einen Luftvorhang (26, 30) entlang der Ebene (P) in mindestens eine erste (D1) und zweite (D2) Abstrahlrichtung, die unterschiedlich sind, auszusenden, wobei die Vorrichtung zum Erzeugen eines Luftvorhangs eine Steuereinheit (34) aufweist, die geeignet ist, die Aussendung des mindestens einen Luftvorhangs (26, 30) in die eine und/oder die andere der ersten (D1) und zweiten (D2) Abstrahlrichtung zu steuern, **dadurch gekennzeichnet, dass**:
- die Steuereinheit (34) geeignet ist, eine Strömung jedes Luftvorhangs (26, 30) einzustellen und
- die Vorrichtung (20) zum Erzeugen des Luftvorhangs Mittel (36) zum Erfassen von Personen in der Nähe der Ebene (P) aufweist, wobei die Steuereinheit (34) ausgebildet ist, die Strömung des mindestens einen Luftvorhangs (26, 30) abhängig von dem Vorhandensein und/oder von Bewegungen von Personen in der Nähe der Ebene (P) einzustellen,
- die Vorrichtung (20) zum Erzeugen des Luftvorhangs erste Mittel (22) zum Erzeugen eines ersten Luftvorhangs (26) aufweist, die erste Abstrahlmittel (24) umfassen, die den ersten Luftvorhang (26) entlang der Ebene (P) in der ersten Abstrahlrichtung (D1) aussenden,
- die Vorrichtung (20) zum Erzeugen des Luftvorhangs zweite Mittel (28) zum Erzeugen eines zweiten Luftvorhangs (30) aufweist, die zweite Abstrahlmittel (32) umfassen, die den zweiten Luftvorhang (26) entlang der Ebene (P) in der zweiten Abstrahlrichtung (D1) aussenden,
- die Steuereinheit (34) geeignet ist, das Aussenden des ersten Luftvorhangs (26) und des zweiten Luftvorhangs (30) zu steuern, die Steuereinheit (34) geeignet ist, in einen ersten Betriebsmodus überzugehen, in dem die Strömung des ersten Luftvorhangs (26) verstärkt wird und/oder die Strömung des zweiten Luftvorhangs (30) verringert wird, um die Fortbewegung von Personen von der Außenzone (14) in die Innenzone (12) zu begünstigen, oder in einen zweiten Betriebsmodus überzugehen, in dem die Strömung des ersten Luftvorhangs (26) verringert wird und/oder die Strömung des zweiten Luftvorhangs (30) verstärkt wird, um die Fortbewegung der Personen von der Innenzone (12) zu der Außenzone (14) zu begünstigen.

2. Vorrichtung (20) zum Erzeugen eines Luftvorhangs nach Anspruch 1, bei der die erste Abstrahlrichtung (D1) zu der Innenzone (12) gerichtet ist und die zweite Abstrahlrichtung (D2) zu der Außenzone (14) gerichtet ist.

3. Vorrichtung (20) zum Erzeugen eines Luftvorhangs nach Anspruch 1 oder 2, bei der:
- die Erzeugungsmittel (22) Abstrahlmittel (24) aufweisen, die einen einzigen Luftvorhangs (26) entlang der Ebene (P) aussenden und
- die Vorrichtung (20) zum Erzeugen eines Luftvorhangs Mittel zum Ändern der Ausrichtung der Abstrahlmittel (24) zwischen einer ersten Position, in der der Luftvorhang (26) in die erste Abstrahlrichtung (D1) gesendet wird und einer zweiten Position, in der der Luftvorhang (26) in die zweite Abstrahlrichtung (D2) gesendet wird.

4. Vorrichtung (20) zum Erzeugen eines Luftvorhangs nach einem beliebigen der vorhergehenden Ansprüche, bei der der erste (26) und zweite (30) Luftvorhang zusammen durch die Venturiwirkung eine resultierende Luftströmung erzeugen, die sich in einer resultierenden Richtung verbreitet, wobei die Steuereinheit (34) geeignet ist, die resultierende Richtung zu ändern, indem die Strömungen des ersten (26) und zweiten (30) Luftvorhangs modifiziert werden.

5. Vorrichtung (20) zum Erzeugen eines Luftvorhangs nach einem beliebigen der vorhergehenden Ansprüche, bei der die Steuereinheit (34) geeignet ist, eine Temperatur jedes Luftvorhangs (26, 30) einzustellen.

6. Vorrichtung (20) zum Erzeugen eines Luftvorhangs nach Anspruch 5, die Mittel (38) zum Erfassen von meteorologischen Bedingungen in der Außenzone (14), insbesondere zum Messen einer Temperatur in der Außenzone (14) und/oder zum Erfassen von Regen umfasst, wobei die Steuereinheit (34) ausgebildet ist, die Strömung und/oder die Temperatur jedes Luftvorhangs (26, 30) abhängig von den erfassten meteorologischen Bedingungen einzustellen.

7. Vorrichtung (20) zum Erzeugen eines Luftvorhangs nach Anspruch 5 oder 6, die Mittel (40) zur Klimatisierung der Innenzone (12) aufweist, die geeignet sind, in unterschiedliche Klimatisierungszustände der Innenzone (12) überzugehen, wobei die Steuereinheit (34) ausgebildet ist, die Strömung und/oder die Temperatur des mindestens einen Luftvorhangs (26, 30) abhängig von dem Zustand der Klimatisierungsmittel (40) einzustellen.

8. Vorrichtung (20) zum Erzeugen eines Vorhangs nach einem beliebigen der vorhergehenden Ansprüche, bei der die Abstrahlmittel (24, 32) Düsen zum Abstrahlen eines Luftvorhangs aufweisen, wobei mindestens eine der Düsen angeordnet ist, den entsprechenden Luftvorhang vertikal abzustrahlen und/oder mindestens eine der Düsen angeordnet ist, den entsprechenden Luftvorhang horizontal abzustrahlen.

9. Kabine (10), insbesondere Fahrzeugkabine, die eine Innenzone (12) und eine Außenzone (14) abgrenzt und eine Öffnung (16) zum Übergang zwischen der Innenzone (12) und der Außenzone (14) aufweist, und die eine Vorrichtung (20) zum Erzeugen eines Luftvorhangs nach einem beliebigen der Ansprüche 1 bis 8 aufweist, die angeordnet ist, den mindestens einen Luftvorhang (26, 30) zu erzeugen, der die Übergangsöffnung (16) bedeckt, wobei die Übergangsöffnung (16) in der Ebene (P) definiert ist.

10. Kabine (10) nach Anspruch 9, die mindestens eine Tür (18) aufweist, die zwischen einer geschlossenen Stellung, in der die Übergangsöffnung (16) verschlossen ist, und einer offenen Stellung, in der diese Übergangsöffnung (16) freigelegt ist, beweglich ist, wobei die Steuereinheit (34) ausgebildet ist, die Strömung des mindestens einen Luftvorhangs (26, 30) zu verstärken, bevor Tür (18) von ihrer offenen Stellung in ihre geschlossene Stellung übergeht.

## Claims

1. An air curtain generating device (20) for generating air curtains along a plane (P) defining an inside zone (12) and an outside zone (14), comprising air curtain generating means (22, 28) including air curtain diffusion means (24, 32), able to diffuse at least one air curtain (26, 30) along said plane (P), in at least first (D1) and second (D2) separate diffusion directions, the air curtain generating device (20) including a control unit (34) able to control the diffusion of at least one air curtain (26, 30) in one and/or the other of the first (D1) and second (D2) diffusion directions, **characterized in that**:
- the control unit (34) is able to regulate a flow of each air curtain (26, 30), and
- the air curtain generating device (20) includes detection means (36) for detecting people near said plane (P), the control unit (34) being configured to adjust the flow of the at least one air curtain (26, 30) based on the presence and/or movements of people near said plane (P),
- the air curtain generating device (20) includes first air curtain generating means (22) for generating a first air curtain (26), comprising first air curtain diffusion means (24) diffusing the first air curtain (26) along said plane (P), in the first diffusion direction (D1), and
- the air curtain generating device (20) includes second air curtain generation means (28) for generating a second air curtain (30), comprising second air curtain diffusion means (32) diffusing the second air curtain (30), along said plane (P), in the second diffusion direction (D2),
- the control unit (34) is able to control the diffusion of the first air curtain (26) and the second air curtain (30), the control unit (34) bein able to enter a first operating mode, in which the flow of the first air curtain (26) is increased and/or the flow of the second air curtain (30) is reduced to favor the movement of people from the outside zone (14) toward the inside zone (12), or in a second operating mode, wherein the flow of the first air curtain (26) is reduced and/or the flow of the second air curtain (30) is increased to favor the movement of people from the inside zone (12) toward the outside zone (14).

2. The air curtain generating device (20) according to claim 1, wherein the first diffusion direction (D1) is oriented toward the inside zone (12), and the second diffusion direction (D2) is oriented toward the outside zone (14).

3. The air curtain generating device (20) according to claim 1 or 2, wherein:
- the air curtain generating means (22) include diffusion means (24) diffusing the air curtain (26) along said plane (P), and
- the air curtain generating device (20) includes means for modifying the orientation of the air curtain diffusion means (24), between a first position, in which the air curtain (26) is diffused in the first diffusion direction (D1), and a second position, in which the air curtain (26) is diffused in the second diffusion direction (D2).

4. The air curtain generating device (20) according to any of the preceding claims, wherein the first (26) and second (30) air curtains together generate, by venturi effect, a resulting air flow diffusing in a resulting direction, the control unit (34) being able to modify said resulting direction by modifying the flows of the first (26) and second (30) air curtains.

5. The air curtain generating device (20) according to any one of the preceding claims, wherein the control unit (34) is able to regulate a temperature of each air curtain (26, 30).

6. The air curtain generating device (20) according to claim 5, including means (38) for detecting weather conditions in the outside zone (14), in particular for measuring temperature in the outside zone (14) and/or for detecting rain, the control unit (34) being configured to adjust the flow and/or temperature of each air curtain (26, 30) based on the detected weather conditions.

7. The air curtain generating device (20) according to claim 5 or 6, including air conditioning means (40) for air conditioning in the inside zone (12), able to enter different air conditioning states of said inside zone (12), the control unit (34) being configured to adjust the flow and/or temperature of the at least one air curtain (26, 30) as a function of the status of the air conditioning means (40).

8. The air curtain generating device (20) according to any one of the preceding claims, wherein the air curtain diffusion means (24, 32) include nozzles for emitting an air curtain, at least one of the nozzles being arranged to emit the corresponding air curtain vertically, and/or at least one of the nozzles being arranged to emit the corresponding air curtain horizontally.

9. A cabin (10), in particular a vehicle cabin, defining an inside zone (12) and an outside zone (14), and including a passage opening (16) between the inside zone (12) and the outside zone (14), including an air curtain generating device (20) according to any one of claims 1 to 8, arranged to generate the at least one air curtain (26, 30) covering the passage opening (16), said passage opening (16) being defined in said plane (P).

10. The cabin (10) according to claim 9, including at least one door (18) movable between a closed position, in which the passage opening (16) is closed off, and an open position, in which said passage opening (16) is free, the control unit (34) being configured to increase the flow of the at least one air curtain (26, 30) prior to the passage of the door (18) from its open position to its closed position.
